# EUROPEAN PATENT APPLICATION

(11) **EP 3 301 570 A1**
(43) Date of publication of application: **04.04.2018**
(21) Application number: 17193074.6
(22) Date of filing: 26.09.2017
(51) Int. Cl.: G06F 9/4401, G06F 9/50

(54) **AUTOMATED-VEHICLE RESOURCE MANAGEMENT SYSTEM**

(30) Priority: 28.09.2016 US 201615278271
(71) Applicant: Delphi Technologies, Inc., Troy, MI 48007-5052 (US)
(72) Inventor: BAILEY, Kirk, A, Westfield, Indiana 46074 (US)
(74) Representative: Robert, Vincent

(57) **Abstract**

An automated-vehicle resource management system (10) includes a memory (14) and a controller (24). The memory (14) is used to store a program-and-data (20) and is characterized by a capacity (22). The controller (24) is in communication with the memory (14) and is configured to determine when a vehicle (12) is not-in-use, determine a percentage of the capacity (22) that is used by the program-and-data (20), suspend (18) the operation of the system (10) when the vehicle (12) is not-in-use and the percentage (32) is not greater than a threshold (34), and re-boot the system (10) when the vehicle (12) is not-in-use and the percentage (32) is greater than the threshold (34).

## Description

### TECHNICAL FIELD OF INVENTION

This disclosure generally relates to an automated-vehicle resource management system, and more particularly relates to a system that manages a memory capacity.

### BACKGROUND OF INVENTION

It is known to boot the software of a vehicle-system at each key-on event to repair various software related system capacity shortages. As vehicle software becomes more complex, the boot times become longer and may lead to customer dissatisfaction if a particular software feature is not immediately available for use.

### SUMMARY OF THE INVENTION

In accordance with one embodiment, an automated-vehicle resource management system is provided. The automated-vehicle resource management system includes a memory and a controller. The memory is used to store a program-and-data and is characterized by a capacity. The controller is in communication with the memory. The controller is configured to determine when a vehicle is not-in-use. The controller is further configured to determine a percentage of the capacity that is used by the program-and-data. The controller is further configured to suspend the operation of the system when the vehicle is not-in-use and the percentage is not greater than a threshold. The controller is further configured to re-boot the system when the vehicle is not-in-use and the percentage is greater than the threshold.

In a preferred embodiment, suspending the operation of system includes maintaining the program-and-data in the memory, and re-booting the system includes re-loading the program-and-data into the memory. The controller is further configured to determine a battery-usage value while the system is suspended and schedule a power-down of the system when the battery-usage value is greater than a usage-budget value. The controller is further configured to determine a time-duration from the previous re-boot and schedule the re-boot of the system when the vehicle is not-in-use and the time-duration is greater than a time-threshold.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an illustration of an automated-vehicle resource management system in accordance with one embodiment; and
Fig. 2 is a flow-chart of an operation of the system of Fig. 1 in accordance with one embodiment.

### DETAILED DESCRIPTION

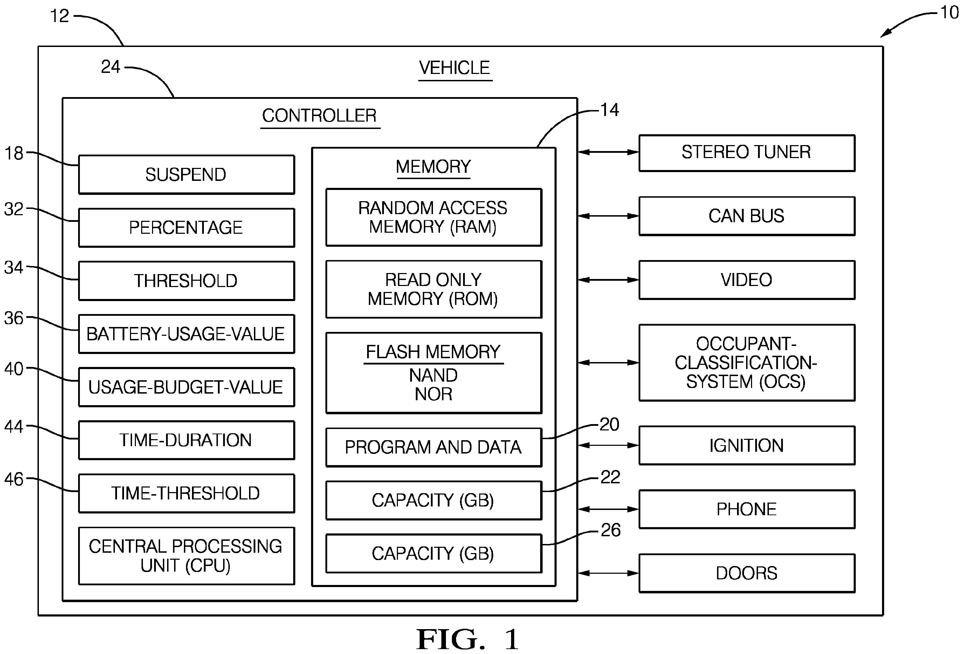

Fig. 1 illustrates a non-limiting example of an automated-vehicle resource management system 10, hereafter referred to as the system 10. The system 10 is generally configured to determine when a resource of the system 10 has reached a critical level that may negatively affect the user experience and or system-performance. A resource of the system 10 may include, but is not limited to, a memory 14, a central-processing-unit utilization (CPU-utilization), and a quantity of operating-system file-descriptors. As will be described in more detail below, the system 10 is an improvement over prior automated-vehicle resource management systems because the system 10 is configured to provide for rapid access to the features of the system 10 when a vehicle 12 is started because the system 10 performs a re-boot 16 of the system 10 at a time when the vehicle 12 is not-in-use, after which the system 10 may be placed in a suspend 18 mode. As used herein, the terms "boot" and "re-boot" represent the same function of starting the system 10. The term "boot" is typically used to denote the first or initial start of the system 10 (i.e. a cold-boot). The term "re-boot" is typically used to denote a subsequent start after the system 10 has been in uninterrupted operation, as will be recognized by one skilled in the art. Returning the system 10 to operational from the re-boot 16 compared to the suspend 18 is differentiated by the amount of time required. During a re-boot 16, a program-and-data 20 must be re-loaded into a random-access-memory (RAM) and may require several seconds to complete depending on the size of the program-and-data 20 being transferred. During the re-boot 16 the features of the system 10 remain unavailable until the re-boot 16 is completed. In contrast, the suspend 18 maintains the program-and-data 20 in the RAM providing for rapid access of the features of the system 10.

The system 10 includes the memory 14 used to store the program-and-data 20. The memory 14 is characterized by a capacity 22 typically measured in gigabytes (GB) and may include the random-access-memory (RAM), a NOR flash-memory, a NAND flash-memory, a read-only-memory (ROM), and read-write-memory (RWM). The program-and-data 20 contain various software and associated calibration parameters necessary for the operation of the vehicle 12, as will be recognized by one skilled in the art.

The system 10 also includes a controller 24, in electrical communication with the memory 14. The controller 24 may include a processor (not shown) such as a microprocessor or other control circuitry such as analog and/or digital control circuitry including an application specific integrated circuit (ASIC) for processing data as should be evident to those skilled in the art. The controller 24 may include other memory-devices (not shown), including non-volatile-memory, such as electrically-erasable-programmable-read-only-memory (EEPROM) for storing one or more routines, thresholds and captured-data. The one or more routines may be executed by the processor to perform steps for determining if signals received by the controller 24 indicate the vehicle 12 is not-in-use as described herein.

The controller 24 is configured to determine when the vehicle 12 is not-in-use and may include monitoring various vehicle-systems such as an ignition-state, a door opening and a door closing, a phone call, an occupant-classification-system (OCS), and any active system-shut-down-delays (i.e. audio-system, video-system, courtesy lighting, electrical-system, etc.), for example. The controller 24 may determine that the vehicle 12 is not-in-use when the ignition-state is off, the phone call is inactive, the occupants of the vehicle 12 have exited the vehicle 12 based on the door opening and door closing and the OCS, and the system-shut-down-delays are expired, for example.

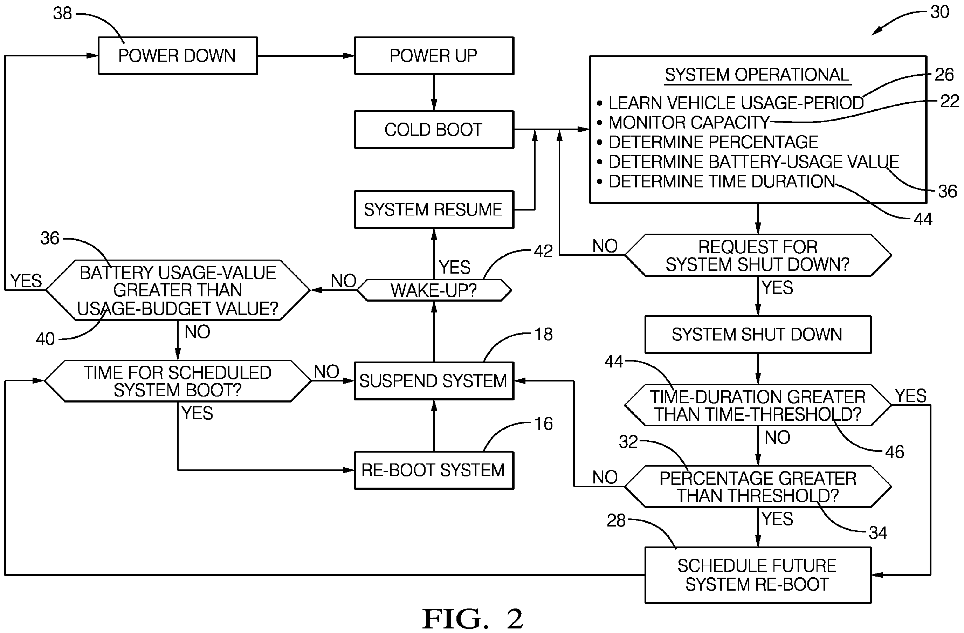

The controller 24 may be further configured to learn a usage-period 26 of the vehicle 12 and store the usage-period 26 information in the memory 14 for scheduling a future re-boot 16 (Fig. 2) of the system 10 when the vehicle 12 is not-in-use. The controller 24 may learn that the vehicle 12 is used daily during the work-week for commuting to and from a particular location at a particular time. The controller 24 may learn that the vehicle 12 may be used again during mid-day, for example. The controller 24 may elect to schedule 28 a re-boot 16 of the system 10 based on the usage-period 26 during the periods when the vehicle 12 is not-in-use.

Fig. 2 is a flow-chart 30 that illustrates a non-limiting example of an operation of the system 10. The controller 24 is further configured to determine a percentage 32 of the capacity 22 of the memory 14 that is used by the program-and-data 20. A request for a shut-down of the system 10 may be processed by the controller 24 and the controller 24 may suspend 18 the operation of the system 10 when the vehicle 12 is not-in-use and when the percentage 32 is not greater than a threshold 34. The threshold 34 may be set to meet the needs of the customer and may typically be ninety-percent (90%) of the total capacity 22 of the memory 14 (i.e. 10% remaining). Advantageously, with the system 10 in suspend 18, the RAM is powered and the program-and-data 20 are maintained in the RAM providing for rapid access to the features of the system 10 when a wake-up 42 event occurs, such as when the occupant returns to the vehicle 12. The wake-up 42 event may also be triggered by the opening of the door, or an unlocking of the door of the vehicle 12, or a remote-starting of the vehicle 12, for example, and will be recognized by one skilled in the art. The suspend 18 is in contrast to when the system 10 is re-booted 16 and the data that is stored in the flash-memory must be re-loaded into the RAM, typically requiring several seconds and resulting in a loss of access to the features of the system 10 until the re-boot 16 cycle is complete.

The controller 24 is further configured to re-boot 16 the system 10 when the vehicle 12 is not-in-use and the percentage 32 is greater than the threshold 34. That is, when the utilization of the memory 14 has exceeded 90% of the total memory 14 the system 10 will schedule 28 a re-boot 16 for a time when the vehicle 12 is not-in-use. The re-boot 16 may be scheduled 28 based on the learned usage-period 26 as described previously. After the scheduled 28 re-boot 16 is complete, the system 10 may be placed in suspend 18 providing for rapid access to the features of the system 10 when a wake-up 42 event occurs as described previously.

The controller 24 is further configured to determine a battery-usage value 36 while the system 10 is in suspend 18 and execute a power-down 38 of the system 10 when the battery-usage value 36 is greater than a usage-budget value 40. A typical usage-budget value 40 of the system 10 in suspend 18 may be two milli-Amp-hours (2 mA-h) at a battery voltage of 14.4 Volts (14.4 V). That is, if the system 10 draws 4 mA while in suspend 18, a power-down 38 may occur after one-half hour (0.5 h) to prevent further draw-down of the battery. During the power-down 38 the RAM is de-powered and the program-and-data 20 is cleared from the RAM. A power-up event will initiate a cold-boot where the RAM is powered and the program-and-data 20 that is stored in the flash-memory is loaded into the RAM, typically taking several seconds and resulting in delayed access to the features of the system 10 until the cold-boot is complete.

The controller 24 is further configured to determine a time-duration 44 from the previous re-boot 16 and schedule 28 a re-boot 16 of the system 10 when the vehicle 12 is not-in-use and the time-duration 44 is greater than a time-threshold 46. The time-threshold 46 may be set to meet the customer requirements and may typically be 18 hours, for example.

Accordingly, an automated-vehicle resource management system 10, and a controller 24 for the automated-vehicle resource management system 10 is provided. The system 10 is an improvement over prior automated-vehicle resource management systems because the system 10 is configured to provide for rapid access to the features of the system 10 and re-boot 16 the system 10 at a time when a vehicle 12 is not-in-use, after which the system 10 may be placed in the suspend 18 mode.

While this invention has been described in terms of the preferred embodiments thereof, it is not intended to be so limited, but rather only to the extent set forth in the claims that follow.

## Claims

1. An automated-vehicle resource management system (10) comprising:
a memory (14) used to store a program-and-data (20), wherein the memory (14) is **characterized by** a capacity (22); and
a controller (24) in communication with the memory (14), said controller (24) configured to determine when a vehicle (12) is not-in-use, determine a percentage (32) of the capacity (22) that is used by the program-and-data (20), suspend (18) the operation of the system (10) when the vehicle (12) is not-in-use and the percentage (32) is not greater than a threshold (34), and re-boot (16) the system (10) when the vehicle (12) is not-in-use and the percentage (32) is greater than the threshold (34).

2. The system (10) in accordance with claim 1, wherein suspending (18) the operation of system (10) includes maintaining the program-and-data (20) in the memory (14), and re-booting (16) the system (10) includes re-loading the program-and-data (20) into the memory (14).

3. The system (10) according to any one of the preceding claims, wherein the controller (24) is further configured to determine a battery-usage value (36) while the system (10) is suspended (18) and schedule a power-down (38) of the system (10) when the battery-usage value (36) is greater than a usage-budget value (40).

4. The system (10) according to any one of the preceding claims, wherein the controller (24) is further configured to determine a time-duration (44) from the previous re-boot (16) and schedule the re-boot (16) of the system (10) when the vehicle (12) is not-in-use and the time-duration (44) is greater than a time-threshold (46).
